# EUROPÄISCHE PATENTANMELDUNG

(11) **EP 0 575 769 A2**
(43) Veröffentlichungstag der Anmeldung: **29.12.1993**
(21) Anmeldenummer: 93108537.7
(22) Anmeldetag: 27.05.1993
(51) Int. Cl.: H04N 3/15

(54) **Videokamera mit einem Halbleiterbildsensor**

(30) Priorität: 20.06.1992 DE 4220236
(71) Anmelder: ROBERT BOSCH GMBH, 70442 Stuttgart (DE)
(72) Erfinder: Dohmann, Bernhard, W-3200 Hildesheim (DE)

(57) **Zusammenfassung**

Bei einer Videokamera mit einem Halbleiterbildsensor, der eine Matrix von m x n lichtempfindlichen Elementen zur Wandlung jeweils eines Bildelementes aufweist, werden zur Übertragung eines Bildes mit einem von m x n abweichenden Seitenverhältnis die Signalanteile der dem Bild zugeordneten Bildelemente zur Bildung eines Videosignals verwendet.

## Beschreibung

Die Erfindung geht aus von einer Videokamera nach der Gattung des Hauptanspruchs.

Videokameras mit einem Halbleiterbildsensor haben ein durch den Halbleiterbildsensor bzw. dessen Anzahl lichtempfindlicher Elemente ein vorgegebenes Seitenverhältnis. Dieses beträgt bei herkömmlichen Videokameras 4:3. Für ein verbessertes Fernsehsystem, das sogenannte HDTV (= High Definition Television), wird ein Seitenverhältnis von 16:9 vorgeschlagen. Für einige Sonderanwendungen - vorzugsweise im Bereich der Bildverarbeitung und Bilderkennung wird auch das Seitenverhältnis 1:1 benutzt. Das einzelne lichtempfindliche Element bzw. das von diesem gewandelte Bildelement hat dabei eine quadratische Form.

Die Herstellung von Halbleiterbildsensoren ist jedoch sehr aufwendig und daher nur für eine begrenzte Anzahl von Seitenverhältnissen bzw. Bildgrößen wirtschaftlich sinnvoll.

Durch die Erfindung wird eine Videokamera vorgeschlagen, bei welcher ein jeweils gewünschtes Seitenverhältnis bzw. eine gewünschte Bildgrö- ße (Anzahl von Bildelementen) aufgenommen und übertragen werden kann, obwohl für das jeweilige Format kein direkt passender Halbleiterbildsensor zur Verfügung steht.

Die erfindungsgemäße Videokamera mit den kennzeichnenden Merkmalen des Hauptanspruchs hat den Vorteil, daß das Format des aufzunehmenden und des zu übertragenden Bildes weitgehend unabhängig von dem Format des Halbleiterbildsensors ist.

Besonders vorteilhaft ist eine Weiterbildung der Erfindung im Zusammenhang mit der sogenannten Mikroverschiebung, wobei von Bildabtastung zu Bildabtastung die Abbildung auf dem Halbleiterbildsensor um Bruchteile des Rastermaßes der lichtempfindlichen Elemente verschoben wird. Insbesondere zur Übertragung ruhender Bilder ist diese Mikroverschiebung bestens geeignet.

Durch die in den Unteransprüchen aufgeführten Maßnahmen sind vorteilhafte Weiterbildungen und Verbesserungen der im Hauptanspruch angegebenen Erfindung möglich. Die Erfindung ist zwar in erster Linie für flächenhafte Halbleiterbildsensoren vorgesehen. Eine sinngemäße Anwendung auf eine Bildaufnahme mit einem Zeilensensor ist jedoch auch möglich.

So kann beispielsweise ein Bild mit einem beliebigen Seitenverhältnis aufgenommen werden, wozu gemäß einer Weiterbildung die Vervielfachung um eine ganze Zahl p und/oder q erfolgt, wobei p = 1 +[mo/m] und/oder q = 1 +[no/n] ist, wobei mo bzw. no die Anzahl der gewünschten Bildelemente und m bzw. n die Anzahl der tatsächlichen Bildelemente des Halbleiterbildsensors an jeweils einer Seite des Bildes darstellen. Um die zum Bild gehörenden Bildelemente von anderen auf dem Halbleiterbildsensor gebildeten Bildelementen zu trennen, sind verschiedene Maßnahmen möglich.

Es kann beispielsweise vorgesehen sein, daß aus dem Halbleiterbildsensor Videosignale in an sich bekannter Weise ausgelesen werden und daß die ausgelesenen Videosignale in einen Speicher eingeschrieben werden und aus dem Speicher nur die zu dem zu übertragenden Bild gehörenden Signalanteile ausgelesen werden.

Diese Trennung bzw. die Ausdehnung der Signalanteile des Bildes über eine entsprechend der jeweiligen Norm vorgesehene Zeit kann auch dadurch erfolgen, daß zum Auslesen der Videosignale aus dem Halbleiterbildsensor Taktimpulse veränderlicher Frequenz verwendet werden, wobei die Frequenz der Taktimpulse für Signalanteile außerhalb des zu übertragenden Bildes größer als die Frequenz der Taktimpulse für die Signalanteile innerhalb des zu übertragenden Bildes ist.

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung der lichtempfindlichen Fläche eines Halbleiterbildsensors und des aufzunehmenden und zu übertragenden Bildes,
Fig. 2 die Fläche eines Halbleiterbildsensors mit verschiedenen möglichen Bildformaten,
Fig. 3 eine schematische Darstellung zur Mikroverschiebung,
Fig. 4 ein Blockschaltbild einer erfindungsgemäßen Videokamera,
Fig. 5 einen Teil der Videokamera nach Fig. 4 in detaillierterer Darstellung und
Fig. 6 einen anderen Teil der Videokamera nach Fig. 4 in detaillierterer Darstellung.

Gleiche Teile sind in den Figuren mit gleichen Bezugszeichen versehen.

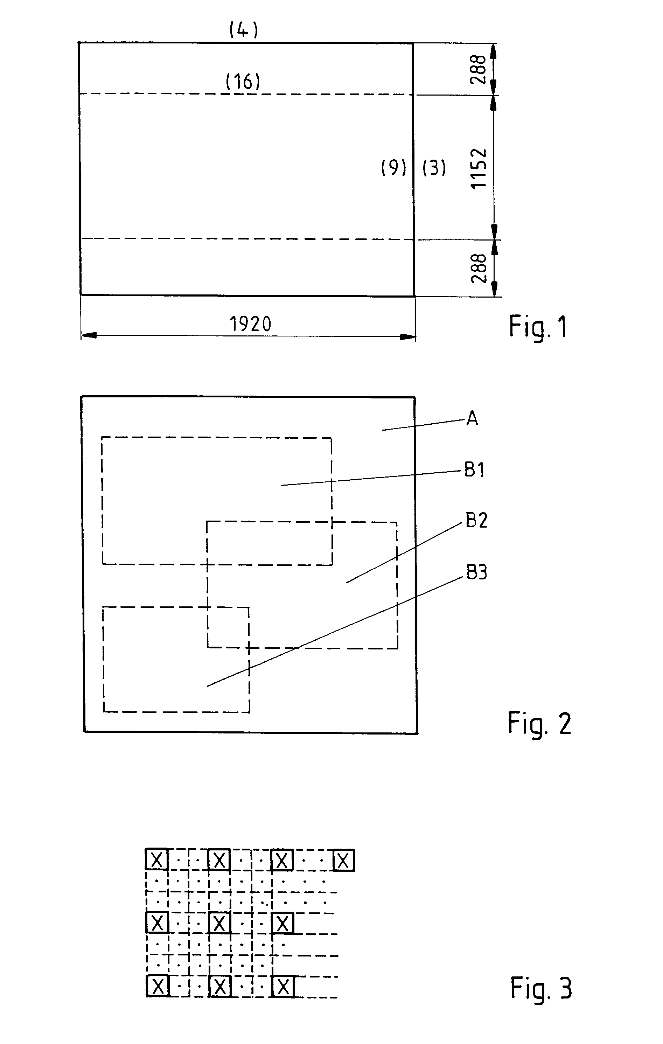

Die in Fig. 1 dargestellte Matrix von 1920 x 1728 Bildelementen wird durch einen Halbleiterbildsensor von 640 x 576 Elementen und durch eine Verdreifachung der Elemente je Richtung durch Mikroverschiebung ermöglicht. Da die Schritte bei der Mikroverschiebung in beiden Richtungen gleich sind, bleibt das Format der Bildelemente dabei unverändert. Ein an den HDTV-Standard angepaßtes Format von 16:9 wird dadurch erreicht, daß bei Beibehaltung der Bildelementenzahl in vertikaler Richtung (m) 576 Zeilen (33%) nicht ausgelesen werden. Auf diese Weise können kostengünstige stardardisierte Fernseh-Bildsensoren für die Aufnahme hochaufgelöster Bilder nach dem HDTV-Standard verwendet werden.

Bei dem in Fig. 1 dargestellten Beispiel liegt das aufzunehmende und das zu übertragende Bild in der Mitte der gesamten Fläche, was an sich in Bezug auf optische Verzeichnungen und Vignettierungen günstig ist. Es ist im Rahmen der Erfindung jedoch auch möglich, das aufzunehmende Bild nach oben oder unten zu verschieben. Als Beispiel für Bilder verschiedener Formate und Lagen innerhalb eines maximal möglichen Aufnahmebereichs A sind in Fig. 2 drei Bilder B2, B3, B4 angedeutet.

Fig. 3 veranschaulicht die Mikroverschiebung mit jeweils einer Verdreifachung der Zahl der Bildelemente in beiden Richtungen. Die mit einem Kreuz versehenen Bildelemente werden bei einer ersten Abtastung erzeugt, während die mit einem Punkt versehenen Bildelemente nach und nach durch eine Verschiebung der Abbildung auf dem Halbleiterbildsensor oder durch eine Verschiebung des Halbleiterbildsensors selbst erzeugt werden. Die Verschiebung kann in an sich bekannter Weise mit Hilfe von piezoelektrischen Wandlern erfolgen, wobei vorzugsweise das Objektiv stehenbleibt und entweder der Halbleiterbildsensor verschoben oder ein zwischen dem Objektiv und dem Halbleiterbildsensor angeordnetes optisches Bauteil bewegt wird. Ausführungsbeispiele hierfür sind in den Patentanmeldungen P 39 14 577 und P 40 31 753 beschrieben.

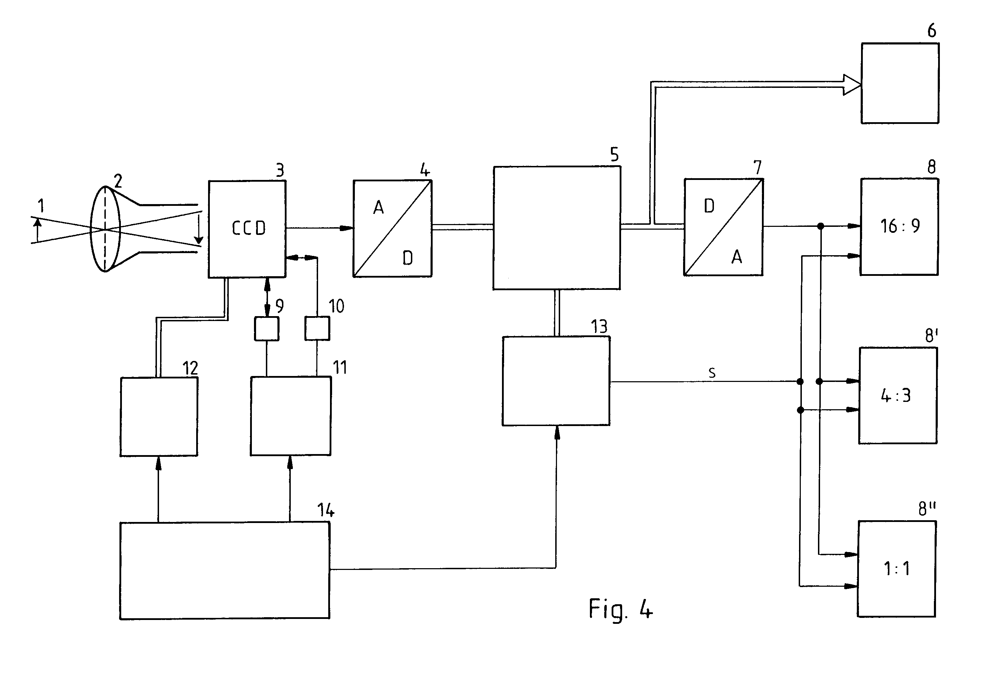

Fig. 4 zeigt ein Blockschaltbild einer erfindungsgemäßen Videokamera, bei welcher ein aufzunehmender Gegenstand 1 mit Hilfe eines Objektivs 2 auf der lichtempfindlichen Fläche eines Halbleiterbildsensors 3 abgebildet wird. Die aus dem Halbleiterbildsensor 3 in an sich bekannter Weise ausgelesenen Videosignale werden über einen Analog/Digital-Wandler 4 einem Bildspeicher 5 zugeführt.

Aus dem Bildspeicher ausgelesene digitale Videosignale können entweder unmittelbar einer Ausgangsschaltung 6 oder über einen Digital/Analog-Wandler 7 Ausgangsschaltungen 8, 8', 8" in analoger Form zugeführt werden. In den Ausgangsschaltungen 6, 8, 8' und 8" wird zu den Videosignalen ein Synchronsignal S zugesetzt.

Zur Mikroverschiebung des Halbleiterbildsensors dient je Verschiebungsrichtung ein Wandler 9, 10. Die Wandler 9, 10 werden von einer Steuerschaltung 11 mit den erforderlichen Steuerspannungen versorgt. Zum Betrieb des Halbleiterbildsensors 3 ist eine Schaltung 12 vorgesehen, die in an sich bekannter Weise dem Halbleiterbildsensor 3 verschiedene Taktsignale zuführt.

Die Steuerung des Bildspeichers 5 erfolgt mit einem Adressengenerator 13, der außerdem das Synchronsignal S erzeugt. Die Steuerung der Mikroverschiebung sowie des Bildspeichers 5, gegebenenfalls auch die Taktung des Halbleiterbildsensors 3 sind abhängig vom jeweils gewünschten Bildformat. Dieses kann über eine übergeordnete Steuerschaltung 14 eingegeben und den Schaltungen 11, 12 und 13 zugeführt werden.

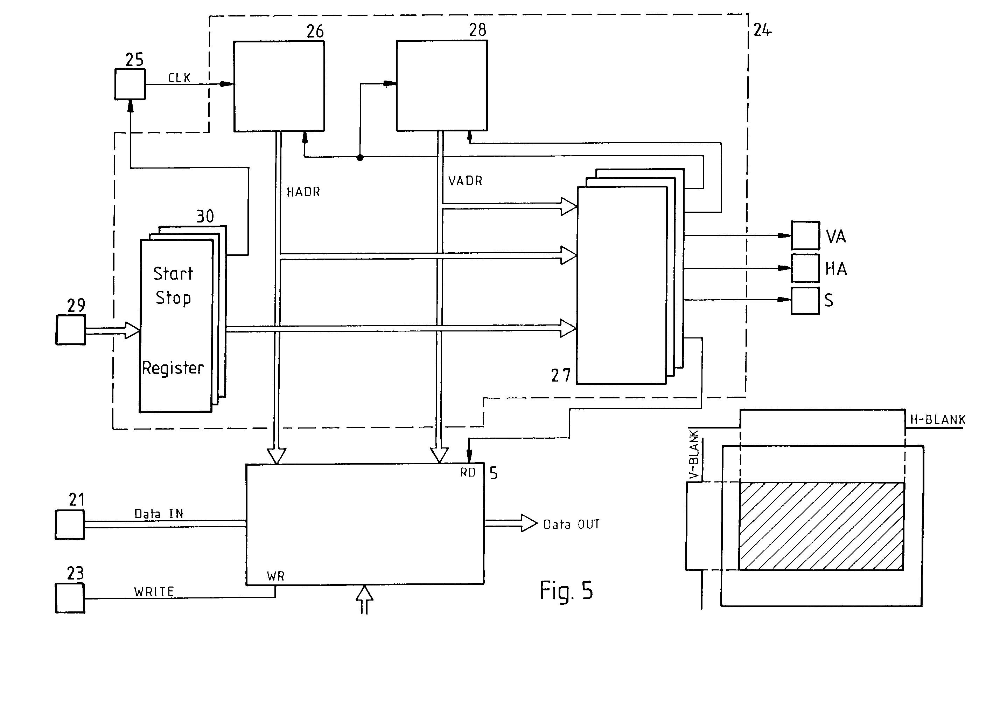

Fig. 5 zeigt ebenfalls in Form eines Blockschaltbildes die Steuerung des Bildspeichers 5. Dabei ist lediglich der Vorgang des Auslesens genauer dargestellt und beschrieben, da bei dem Ausführungsbeispiel das Einschreiben in an sich bekannter Weise Bildelement für Bildelement erfolgt, wozu die einzuschreibenden digitalen Videosignale einem Eingang 21 und kontinuierlich aufwärts gezählte Adressen einem weiteren Eingang 22 zugeführt werden. Schließlich benötigt der Bildspeicher zum Einschreiben ein sogenanntes Wright-Enable-Signal, das an einem Eingang 23 anliegt. Der Bildspeicher ist als sogenanntes Dual-Port-RAM ausgeführt, bei dem Schreib- und Lesevorgänge weitgehend unabhängig voneinander sind. Derartige Speicher sind auf dem Markt erhältlich. Es ist jedoch auch möglich, mit üblichen Schreib-Lese-Speichern einen Bildspeicher zu realisieren, bei dem quasi gleichzeitig geschrieben und gelesen werden kann. Ein Beispiel für einen derartigen Bildspeicher ist in der gleichzeitig eingereichten Patentanmeldung "Verfahren und Anordnung zur Wandlung von digitalen Videosignalen" der Anmelderin beschrieben.

Die Steuerung des Auslesens erfolgt mit einem programmierbaren Logikbaustein 24, der entsprechend dem dargestellten Blockschaltbild programmiert ist. Ein geeigneter programmierbarer Logikbaustein wird beispielsweise von der Firma Alterna unter der Typenbezeichnung EPM 5128 vertrieben. Zum Auslesen der in dem Bildspeicher 5 abgelegten digitalen Videosignale, die zu dem jeweiligen Bild gehören, ist der Baustein 24 wie im folgenden beschrieben, programmiert.

Ein mit Hilfe eines Taktgenerators 25 erzeugter Bildelement-Takt steuert einen Horizontalzähler 26 an, dessen jeweiliger Zählerstand eine Horizontaladresse HADR darstellt. Diese wird einerseits dem Bildspeicher 5 und andererseits einem Komparator 27 zugeführt. Ein Vertikalzähler 28 dient zum Zählen der Zeilen und erzeugt eine Vertikaladresse VADR. Diese wird ebenfalls dem Bildspeicher 5 und dem Komparator 27 zugeleitet.

Über einen Eingang 29 werden von der übergeordneten Steuerschaltung 14 (Fig. 4) Daten in ein Register 30 eingeschrieben, welche das jeweils anzuwendende Format bedeuten - also beispielsweise 1920 x 1152 Bildelemente. Das Register 30 stellt format-spezifische Daten dem Komparator 27 zur Verfügung. Außerdem wird vom Register 30 eine Formatinformation zum Taktgenerator 25 geleitet, da der Auslesetakt vom jeweiligen Format abhängig ist.

Ausgänge des Komparators 27 sind mit Load-Eingängen der Zähler 26, 28 verbunden. Weitere Ausgänge 31, 32, 33 des Komparators 27 dienen zur Ausgabe von Austastimpulsen VA und HA und eines Synchronsignals S.

In Abhängigkeit von den bei 29 zugeführten Daten werden vom Register 30 dem Komparator 27 Daten zugeführt, welche die Lage des jeweiligen Bildes innerhalb des vom Halbleiterbildsensor aufgenommenen gesamten Bildes repräsentieren. Dazu gehört in Horizontal- und Vertikalrichtung jeweils eine Anfangs- (HADR-A, VADR-A) und eine Endadresse (HADR-E, VADR-E). Auf die jeweilige Anfangsadresse HADR-A, VADR-A werden die Zähler 26 bzw. 28 vom Komprator 27 gesetzt. Mit den Impulsen des Taktsignals des Taktgenerators 25 wird der Horizontalzähler 26 hochgezählt, bis die horizontale Endadresse HADR-E erreicht wird, was vom Komparator 27 festgestellt wird. Dann wird vom Komprator der Horizontalzähler über den Load-Eingang auf die horizontale Anfangsadresse HADR-A gesetzt und der Vertikalzähler 28 inkrementiert. Dieses wiederholt sich bis der Vertikalzähler die vertikale Endadresse VADR-E erreicht hat, worauf beide Zähler 26, 28 auf ihren Anfangswert gesetzt werden.

Entsprechend den Adressen HADR und VADR werden die zum Bild gehörenden Bildelemente aus dem Bildspeicher 5 ausgelesen und über einen Ausgang 34 ausgegeben. Zur Steuerung der Lesefunktion ist ein weiterer Ausgang des Komparators 27 mit einem Read-Enable-Eingang RE des Bildspeichers 5 verbunden.

Bei dem in Fig. 1 dargestellten Bildbeispiel sind die Anfangsadressen HADR-A = 1 und VADR-A = 289, während die Endadressen die Werte HADR-E = 1920 und VADR-E = 1440 sind.

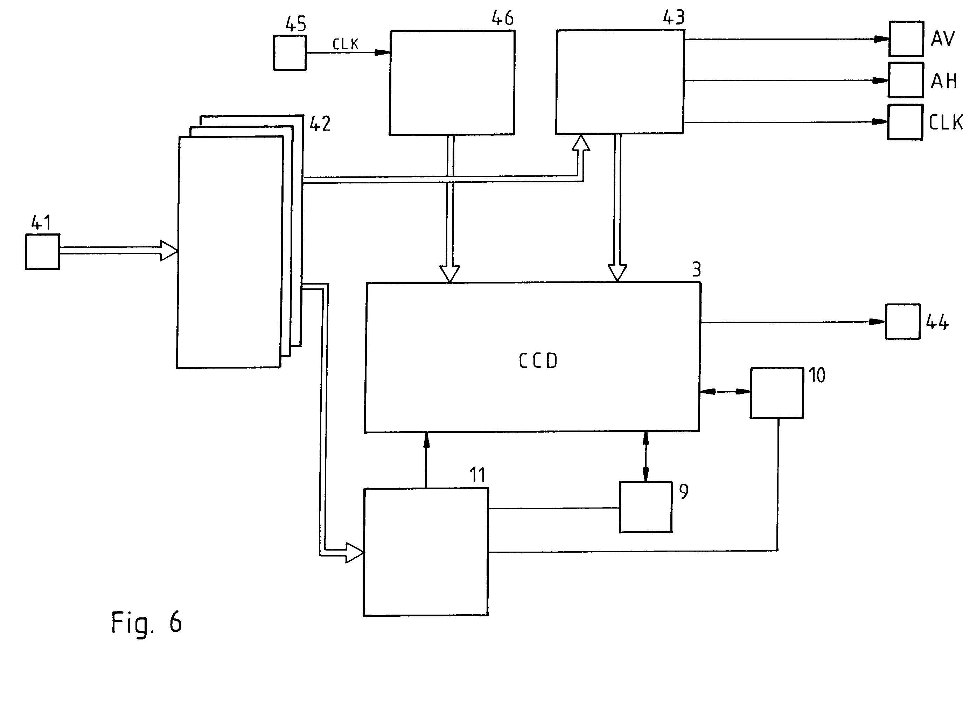

Fig. 6 zeigt die Ansteuerung des Halbleiterbildsensors 3 mit Hilfe der Steuerschaltung 11 für die Mikroverschiebung und die beiden piezoelektrischen Wandler 9, 10 sowie die Erzeugung verschiedener Steuer- und Taktsignale für den Halbleiterbildsensor. Dazu werden einem Eingang 41 von der übergeordneten Steuerschaltung 14 (Fig. 4) Daten zugeführt, welche das jeweils zu benutzende Format beschreiben. Diese werden in ein Register 42 eingeschrieben, von welchem vom Format abhängige Daten einerseits der Steuerschaltung 11 und andererseits einer Steuerschaltung 43 für das Auslesen der Videosignale aus dem Halbleiterbildsensor 3 zugeführt werden. Die ausgelesenen Videosignale können einem Ausgang 44 entnommen werden. Außerdem wird von einem bei 45 zugeführten Taktsignal eine Vielzahl von gegeneinander phasenverschobenen Taktsignalen für den Halbleiterbildsensor 3 in einer Steuerschaltung 46 erzeugt. Diese Schaltungen sind an sich bekannt, so daß sich eine nähere Erläuterung zum Verständnis der vorliegenden Erfindung erübrigt.

## Patentansprüche

1. Videokamera mit einem Halbleiterbildsensor, der eine Matrix von m x n lichtempfindlichen Elementen zur Wandlung jeweils eines Bildelementes aufweist, dadurch gekennzeichnet, daß zur Übertragung eines Bildes mit einem von m x n abweichenden Seitenverhältnis die Signalanteile der dem Bild zugeordneten Bildelemente zur Bildung eines Videosignals verwendet werden.

2. Videokamera nach Anspruch 1, dadurch gekennzeichnet, daß die Zahl der Bildelemente durch Verschiebung des Bildes von Bildperiode zu Bildperiode in m- und/oder n-Richtung erhöht wird.

3. Videokamera nach Anspruch 2, dadurch gekennzeichnet, daß die Vervielfachung um eine ganze Zahl p und/oder q erfolgt, wobei p = 1 + [mo/m] und/oder q = 1 + [no/n] ist, wobei mo bzw. no die Anzahl der Bildelemente an jeweils einer Seite des Bildes darstellen.

4. Videokamera nach Anspruch 1, dadurch gekennzeichnet, daß aus dem Halbleiterbildsensor (3) Videosignale in an sich bekannter Weise ausgelesen werden und daß die ausgelesenen Videosignale in einen Speicher (5) eingeschrieben werden und aus dem Speicher (5) nur die zu dem zu übertragenden Bild gehörenden Signalanteile ausgelesen werden.

5. Videokamera nach Anspruch 1, dadurch gekennzeichnet, daß zum Auslesen der Videosignale aus dem Halbleiterbildsensor (3) Taktimpulse veränderlicher Frequenz verwendet werden, wobei die Frequenz der Taktimpulse für Signalanteile außerhalb des zu übertragenden Bildes größer als die Frequenz der Taktimpulse für die Signalanteile innerhalb des zu übertragenden Bildes ist.

6. Videokamera nach Anspruch 4, dadurch gekennzeichnet, daß aus dem Halbleiterbildsensor (3) ausgelesene Videosignale über einen Analog/Digital-Wandler (4) einem Bildspeicher (5) zuführbar sind und daß ein Ausgang des Bildspeichers (5) gegebenenfalls über einen Digital/Analog-Wandler (7) mit einem Ausgang (6, 8, 8', 8") der Videokamera verbunden ist, daß der Bildspeicher (5) von einem Adressengenerator (13, 24) derart steuerbar ist, daß im wesentlichen alle von dem Halbleiterbildsensor (3) erzeugten Anteile des Videosignals eingeschrieben und nur die zu dem zu übertragenden Bild gehörenden Signalanteile ausgelesen werden, und daß eine Steuerschaltung (12) für den Halbleiterbildsensor (3) und eine Steuerschaltung (11) für die Verschiebung des Halbleiterbildsensors (3) sowie der Adressengenerator (13) von einer übergeordneten Steuerschaltung (14) Informationen über die Seitenlängen und die Lage des zu übertragenden Bildes in Bezug auf die gesamte lichtempfindliche Fläche des Halbleiterbildsensors (3) erhalten.

7. Videokamera nach Anspruch 4, dadurch gekennzeichnet, daß aus dem Halbleiterbildsensor ausgelesene Videosignale über einen Analog/Digital-Wandler einem Bildspeicher zuführbar sind und daß ein Ausgang des Bildspeichers gegebenenfalls über einen Digital/Analog-Wandler mit einem Ausgang der Videokamera verbunden ist, daß der Bildspeicher von einem Adressengenerator derart steuerbar ist, daß nur die zu dem zu übertragenden Bild gehörenden Anteile des Videosignals eingeschrieben und im wesentlichen alle gespeicherten Signale ausgelesen werden, und daß eine Steuerschaltung für den Halbleiterbildsensor und eine Steuerschaltung für die Verschiebung des Halbleiterbildsensors sowie der Adressengenerator von einer übergeordneten Steuerschaltung Informationen über die Seitenlängen und die Lage des zu übertragenden Bildes in Bezug auf die gesamte lichtempfindliche Fläche des Halbleiterbildsensors erhalten.

8. Videokamera nach einem der vorhergehenden Ansprüche, dadurch gekennzeichnet, daß der Halbleiterbildsensor sequentiell mit verschiedenen Farbauszügen belichtet wird und daß in dem Bildspeicher die sequentiell erzeugten, den jeweiligen Farbauszügen zugeordneten Signale sequentiell eingeschrieben und aus dem Bildspeicher parallel ausgelesen werden.
